# EUROPÄISCHE PATENTSCHRIFT

(11) **EP 1 652 262 B1**
(45) Veröffentlichungstag und Bekanntmachung des Hinweises auf die Patenterteilung: **04.08.2010**
(21) Anmeldenummer: 03776892.6
(22) Anmeldetag: 10.11.2003
(51) Int. Cl.: H01M 10/52, H01M 4/02, H01M 4/62, H01M 4/52

(54) **AKTIVIERTE KATHODEN IN LITHIUM-POLYMER-BATTERIEN, DIE FE3O4 ANSTELLE VON LEITRUSS ENTHALTEN**
ACTIVATED CATHODES IN LITHIUM-POLYMER BATTERIES CONTAINING FE304 INSTEAD OF CONDUCTIVE CARBON BLACK
CATHODES ACTIVEES DE BATTERIES AU LITHIUM-POLYMERE, CONTENANT DU FE304 A LA PLACE DU NOIR DE CARBONE CONDUCTEUR

(30) Priorität: 11.11.2002 DE 10252305
(43) Veröffentlichungstag der Anmeldung: 03.05.2006
(73) Patentinhaber: Dilo Trading AG, 6300 Zug (CH)
(72) Erfinder: NAARMANN, Herbert, 67227 Eppstein (DE); KRUGER, Franz, Josef, 65817 Eppstein (DE)
(74) Vertreter: TBK-Patent
(86) Internationale Anmeldenummer: PCT/EP2003/012512
(87) Internationale Veröffentlichungsnummer: WO 2004/045015

(56) Entgegenhaltungen:
- EP-A- 1 225 647
- WO-A-99/00001
- WO-A-99/59218
- US-B1- 6 265 106
- US-B1- 6 312 853
- KOKSBANG R ET AL: "Cathode materials for lithium rocking chair batteries" SOLID STATE IONICS, NORTH HOLLAND PUB. COMPANY. AMSTERDAM, NL, Bd. 84, Nr. 1, 1. März 1996 (1996-03-01), Seiten 1-21, XP004050159 ISSN: 0167-2738
- NETO J M ET AL: "High-temperature substitutional lithiation of magnetite" MATER RES BULL;MATERIALS RESEARCH BULLETIN 1990, Bd. 25, Nr. 4, 1990, Seiten 509-514, XP002272950
- THACKERAY M M ET AL: "PRELIMINARY INVESTIGATION OF THE ELECTROCHEMICAL PERFORMANCE OF alpha -Fe2O3 AND Fe3O4 CATHODES IN HIGH-TEMPERATURE CELLS" MATER RES BULL MAY 1981, Bd. 16, Nr. 5, Mai 1981 (1981-05), Seiten 591-597, XP002272951

## Beschreibung

Die vorliegende Erfindung bezieht sich auf aktivierte Kathoden in Lithium-Polymer-Batterien, in denen Fe₃O₄ verwendet wird. Insbesondere bezieht sich die Erfindung auf derartige aktivierte Kathoden mit verbesserten Eigenschaften und verbesserter Verarbeitbarkeit. Ferner bezieht sie sich auch auf ein Verfahren zur Herstellung derartiger aktivierter Kathoden.

Übergangsmetalloxid-Elektroden z.B. auf Basis von Co, Mn, V, Ti sind bereits bekannt und in der Literatur beschrieben: Handbook of Battery Materials, ed. by I. O. Besenhard p. 293 - 336 (1999) Verlag Chemie, Weinheim (Lit. 1) und Journal of Power Sources 97 - 98 (2001), Lithieted cobaltes for Li-ion batteries p. 290 - 293, electrophoretic fabrication of LiCo0₂, p. 294 - 297, Modified cathodes, p. 298 - 312; improved cathode for Li-ion-batteries (Y doped), p. 313 - 315; role of nickel content, p. 316.- 320, nonstoichiometric LiCo0₂, p. 287 - 289 u.ä. (Lit. 2).

Die üblichen Kathoden für Lithium-Polymer-Batterien enthalten z.B. entspr. DE 10 020 031 A1 (Lit. 3):

| | |
|---|---|
| 65 Ma% | Li-interkaliertes Metalloxid (Mn, Co o. ä.) |
| 6,5 Ma% | Leitruß |
| 4 Ma% | Kynar 2801^{®} (Polymerbinder) |
| 6 Ma% | Plex 6770^{®} (Polymerbinder) |
| 1,5 Ma% | LiClO₄ (Leitsalz) |
| 8,5 Ma% | EC (Ethylencarbonat - Lösungsmittel) |
| 8,5 Ma% | γ-BL(γ-Butyrolacton - Lösungsmittel) |

Dabei bedeutet Ma Masseanteile.

Die Lit. 3 enthält keine Hinweise auf das Langzeitverhalten der dort beschriebenen Zellen, die für 24 Zyklen mitgeteilten Daten (der beiden Batterietypen) geben keinerlei Rückschlüsse auf ein notwendiges Langzeitverhalten für im Handel vertreibbare Verkaufsprodukte.

Die im Stand der Technik bekannten Kathoden für Lithium-Polymer-Batterien sind demnach problematisch, da sie eine ungenügende elektrische Leitfähigkeit, relativ hohen elektrischen Widerstand, verringerte elektrische Stabilität sowie geringe Entladekapazität und erhöhtes Fading von im Langzeittest erprobten Batterien zeigen. Weiterhin ist das große Volumen der Kathodenmasse bei Verarbeitung zu einer Batteriezelle nachteilig.

Der vorliegenden Erfindung liegt somit die Aufgabe zugrunde, verbesserte Kathoden für Lithium-Polymer-Batterien herzustellen, die leicht zu Batteriezellen verarbeitbar sind und verbesserte elektrische Leistungsfähigkeit zeigen. Diese Aufgabe wird mit der gemäß Patentanspruch 1 definierten aktivierten Kathode sowie mit dem in Patentanspruch 15 definierten Verfahren zu deren Herstellung gelöst. Bevorzugte Ausführungsformen finden sich in den Unteransprüchen.

Im Folgenden werden die bevorzugten Ausführungsformen, Vorteile und Verbesserungen, die durch die Erfindung erzielt werden, detailliert beschrieben.

Nach dem erfindungsgemäßen Verfahren wird der Leitruß, der die ausreichende elektrische Leitfähigkeit des Kathodenmaterials garantiert, durch Fe₃0₄ ersetzt. Diese erfindungsgemäße Maßnahme ist neu und in mehrfacher Hinsicht vorteilhaft.

Die elektrische Leitfähigkeit wird verbessert.

Die Benetzung und Penetration des aktiven Kathodenmaterials mit dem Leitsalz sowie mit dem (oder den) Lösungsmittel(n) wird deutlich erhöht, das führt zur Ausbildung von elektrischen Leiterbahnen und Verminderung des Widerstandes. Durch Ersatz des hochvolumigen Rußanteils durch Fe₃0₄ (beispielsweise mit einem spezifischen Gewicht von 5,2 g/cm³), wird außerdem eine bessere Verarbeitbarkeit der Kathodenmasse erreicht, da ein Lösungsmittel im Gegensatz zum Leitruß deutlich weniger absorbiert wird (bedingt durch die geringere Oberfläche bzw. das geringere Volumen des Fe₃0₄ im. Gegensatz zum Leitruß). Der Zusatz von Fe₃0₄ zum Li-interkaliertem Schwermetalloxid zeigt einen überraschenden synergistischen Effekt besonders im Hinblick auf elektrische Stabilität und reduzierte Versagensmechanismen (im fertigen Batteriesystem z.B. bei Verwendung einer konventionellen Anode, mit einem konventionellen Separator und einer erfindungsgemäßen Kathode).

Dieser synergistische Effekt ist um so überraschender, da in der Lit. 1, p. 309 beschrieben ist, daß "- unfortunately Fe₃0₄ ... are unattractive insertion electrodes because the large und bulky transition metal ions in the interstitial space of the B₂0₄ spinel frame work impede the diffusion of the lithium ions ...".

Das erfindungsgemäße Verfahren besteht nun darin, Fe₃0₄ in Kombination mit den Li-interkalierbaren Schwermetalloxiden wie z.B. von Mn, Co, Ni, V, Cr, Mo, Ti sowie deren Gemische einzusetzen. Es kann eine spezielle Misch- und Auftragungstechnik als Ableiterbeschichtung für Batterie - Kathoden verwendet werden. Hierbei beträgt der Anteil der Schwermetalloxide oder deren Gemische vorzugsweise 60 - 85 Ma %, der Zusatz von Fe₃0₄ beträgt vorzugsweise 5 - 10 Ma %, der Polymerbinderanteil vorzugsweise 6 - 15 Ma %, die Leitsalzmenge vorzugsweise 0,9 - 2,5 Ma %, die Lösungsmittelmenge aprotischer Lösungsmittel vorzugsweise 10 - 20 Ma % und die Menge an optionalen Zusatzmitteln vorzugsweise 0,1 - 10 Ma %.

### Kathodenbestandteile:

1. Li-interkalierbare Schwermetalloxide: vorzugsweise solche von Mn, Ni, Co, V, Cr, Mo, Ti, allein oder in Kombination.
2. Fe₃0₄: insbesondere mit einer Korngröße von 0,5 bis 30 µm und bevorzugt keinen Anteilen < 0,3 µm. Vorteilhaft ist ein spezifisches Gewicht von 5,2 g/cm³bei 625 mesh / entsprechend 20 µm.
3. Polymerbinder: in Frage kommen insbesondere Polymere auf Basis von Polyolefinen, Polyisobuten, Polystyrol, Polybutadien, Polyisopren, Copolymere von Styrol mit Butadien und/oder Isopren als statistische Copolymere oder anionisch hergestellte Blockpolymere; ferner Polyvinylpyrrolidon, Polyvinylether, Polyether mit verkappten Endgruppen z. B. mit CH₃- und/oder CH₂ = C(CH₃)CO-, ferner Fluorelastomere z. B. Copolymere, die im Gemisch mit den oben angegebenen Polymeren verwendet werden können, wobei der Anteil der Fluorelastomeren - Copolymeren im Polymergemisch bevorzugt 10 - 90 % beträgt, ferner Fluorelastomere-Terpolymere, die für sich allein oder auch im Gemisch mit den oben angeführten Polymeren eingesetzt werden können. Die Terpolymere sind insbesondere Polymere aus Tetrafluorethylen, Hexafluorpropen, Fluoralkoxy-Monomeren und/oder Vinylidenfluorid.
4. Als Leitsalze kommen insbesondere in Frage: LiClO₄, LiBF₄, Li-Organylborate z.B. Li-Oxalatoborat, LiPF₆, Li-Triflate, Li-Trifluormethylsulfonylimide u.ä. entsprechend der Lit. 1, p. 462 - 463.
5. Aprotische Lösungsmittel sind vorzugsweise Alykylcarbonate u.ä. entsprechend der Lit. 1, p. 459 - 461, ferner Glykolether, sowie niedermolekulare Fluorether sowie Mono- und Di-Methacrylate mit perfluorierten Alkylresten mit C2 - C20, vorzugsweise C3 - C15, oder N-Methylpyrrolidon (NMP).
6. Zusätze, die optional eingesetzt werden können, sind indifferente Hilfsstoffe, die der Verbesserung der Kathodenmasse dienen und Strukturporosität sowie Abfangreaktionen z.B. von Säuren und Störkomponenten bewirken. Bevorzugte Hilfsstoffe sind ausgewählt aus MgO, Al₂O₃, SiO₂ aber auch Li-Acetylacetonat u. ä. Sie können allein oder in Kombination vorliegen.

Zur Herstellung der Kathode entsprechend dem erfindungsgemäßen Verfahren können bevorzugt folgende Verfahrensvarianten mit guten Ergebnissen eingesetzt werden: Alle Einsatzstoffe werden unter Schutzgas - vorzugsweise Argon - verarbeitet.

Alle Einsatzstoffe werden vor ihrer Verwendung entgast bei Temperaturen, z.B. von 20 °C bis 250 °C und unter Drücken von z.B. 10⁵ - 1,3·10⁻² Pa (760 Torr bis 10⁻⁴ Torr), vorzugsweise bei Raumtemperatur bis 110°C und Drucken von 13-1,3 Pa (0,1 bis 0,01 Torr).

Die Verarbeitung der Kathodenbestandteile (1. bis 6.) erfolgt zweckmäßigerweise durch Vermahlen der Schwermetalloxide (1.) mit dem Fe₃0₄ (2.) unter Zusatz der indifferenten Hilfsstoffe (6.) und gegebenenfalls der Leitsalze (4.), vorzugsweise der Li-Organyloborate. Nach dem Vermahlen der oben aufgeführten Komponenten z.B. in einer Stiftmühle, Kugelmühle, Ultraschallbad o.ä. unter Schutzgas bei Temperaturen von z.B. -20 bis 100°C, vorzugsweise bei R.T. bis 50°C, wird gemäß einer bevorzugten Ausführungsform (a) das Leitsalz (4), sofern es nicht schon zugegeben wurde, mit dem Lösungsmittel (5.) zugefügt und kann als Dispersion z.B. 30 - 60 Minuten unter den oben angegebenen Bedingungen vermahlen und dann z.B. einem Collin-Extruder zugeführt werden, der vorzugsweise parallel mit dem Polymerbinder (3.) gespeist wird und der bei Temperaturen von z.B. 75 - 120 °C die Kathodenmasse extrudiert, die dann auf einen Ableiter (z.B. geprimerte Al-Folie) laminiert wird. Die Extrusion kann beispielsweise über eine Breitschlitzdüse zu einer 100 - 150 mm breiten und ca. 10 - 60 µm starken Folie führen. Sie ist hierauf jedoch nicht beschränkt.

Das Weiterverarbeiten zu einem Verbundsystem bevorzugt mit zwischengelagertem Separator und der Anode sowie dem anschließenden Wickeln oder Schichten, Einhausen und Polen zur fertigen Batterie kann auf allgemein bekannte Weise durchgeführt werden.

Eine Verfahrensvariante (b) besteht darin, den Polymerbinder (3.) nach dem vorstehenden Mahlschritt zum Schluss zu dem Mahlgut aus (1.), (2.), (4.), (5.), (6.) zuzugeben bei Temperaturen von z.B. R.T. bis 120°C einzuarbeiten. Eine bevorzugte Ausführungsform besteht dabei aus dem Mischen wonach das Gemisch aus (1.) - (6.) ggfs. über einen Einfüllstutzen - evtl. nach vorheriger Granulierung - eingesetzt und im Extruder (z.B. Collin-2-Wellen-Extruder) zu der oben genannten Folie extrudiert werden kann. Bei diesen und den folgenden Verfahrensvarianten bestimmt die Auswahl der Leitsalze und der aprotischen Lösungsmittel und die angepaßten Reaktions- (Verarbeitungs-) Bedingungen die Verarbeitungstemperatur.

Gemäß einer weiteren Verfahrensvariante (c) können die Li-interkalierbaren Schwermetalloxide (1.) mit dem Fe₃0₄ (2.) gegebenenfalls mit den Hilfsstoffen (6.) z. B. MgO und/oder Li-Acetylacetonat versetzt und dann entsprechend (a) vermahlen, mit einem aprotischen Lösungsmittel (5.) z.B. PC (Polypropylencarbonat) versetzt und mit dem Polymerbinder (3.) angepastet und vermischt und im Extruder - wie z.B. bei (a) - extrudiert, und auf einen geprimerten Al-Ableiter laminiert werden. Anschließend kann in einem Trocknungsprozess das Lösungsmittel (z.B. PC) abgezogen werden. Vor dem Weiterarbeiten zum Verbundsystem aus Kathode (Kathodenmasse + Ableiter), (ggfs. Separator), Anode (Anodenmasse + Ableiter) kann der Kathode (nach (c)) die erforderliche Menge an Elektrolyt (Leitsalz + aprotischen Lösungsmittel) zugefügt werden. Wird Li-Organylborat (z.B. Li-Oxalatoborat) verwendet, so kann dieses relativ temperaturstabile Leitsalz (4) auch direkt mit (1.), (2.), (6.) und (4.) vermahlen werden. Beim Herstellen des Verbundsystems kann dann die Zugabe des Leitsalzes (4.) entfallen, so dass dann lediglich aprotisches Lösungsmittel zugesetzt werden muss.

Gemäß einer weiteren Verfahrensvariante (d) wird allgemein gemäß Verfahren (a) gearbeitet, jedoch als Polymerbinder (3.) ein niedermolekulares Polybutadienöl verwendet werden und die Hälfte des Lösungsmittels (5.) kann ein Methacrylat mit einem perfluorierten Butylrest oder Pentylrest sein, der Rest von (5.) kann aus einem 1:1 Gemisch aus Ethylen-, Propylencarbonat bestehen. Die Verarbeitung kann über einen Extruder erfolgen, bei dem das Gemisch von (1.) - (6.) z.B. über einen Einfüllstutzen eindosiert wird und z.B. aus einer Breitschlitzdüse bei vorzugsweise 75 - 80 °C eine zähe Paste abgezogen und auf einen Al-Ableiter (geprimert) aufgetragen werden kann.

Gemäß einer weiteren Verfahrensvariante (e) kann nach dem Beschichtungsprinzip wie bei (a) oder (c) gearbeitet werden, wobei Schwermetalloxid (z.B. Co-Oxid) (1.) und das Fe₃0₄ (2) in Gegenwart von Leitsalz (4.) (z.B. Li-Oxalatoborat) und Hilfsstoff (6.) (z.B. MgO) vermahlen werden können, dann unter intensivem Rühren mit N-Methylpyrrolidon (NMP) eine feinteilige fließfähige Dispersion erzeugt wird, die in einem Folgeschritt auf eine geprimerte Al-Folie aufgetragen und (z.B. parallel) nach einem kontinuierlichem Trocknungsprozess zu einer dünnen flexiblen Kathodenschicht vorteilhaft in einer Stärke von 24 - 30 µm verarbeitet werden kann. Beim Herstellen des Verbundsystems wird der nach (e) hergestellten Kathode noch aprotisches Lösungsmittel zugefügt. Wurde kein Leitsalz (4) verwendet, so ist auch mit den aprotischen Lösungsmitteln (5.) noch das erforderliche Leitsalz zuzufügen. Der oben angesprochene Trocknungsprozess zum Abziehen des Lösungsmittels NMP kann so gestaltet werden, dass parallel zum Trocknen, die Polymerisation des Methacrylates allein bzw. die Copolymerisation mit dem Polybutadienöl erfolgt.

Gemäß einer weiteren Verfahrensvariante (f) kann analog zu (e) gearbeitet werden, lediglich wird als Polymerbinder (3.) eine wässrige Dispersion z. B. von Dyneon THV^{®}, einem Terpolymeren aus PVDF, HFP und einem Perfluoralkoxy-Derivat verwendet. Das Mahlen erfolgt in der beschriebenen Reihenfolge, jedoch kann die Verwendung von NMP unterbleiben. Die erfindungsgemäße Dispersion aus (1.), (2.), (3.), (4.) z.B. Li-Oxalatoborat kann zweckmäßigerweise mit einem Rakel auf eine geprimerte Al-Folie aufgetragen und dann z.B. in einem Trockenkanal getrocknet werden. Die Dicke der Schicht beträgt hierbei bevorzugt 25 - 28 µm. Zur Herstellung eines batterietauglichen Verbundsystems wird der nach (f) hergestellten Kathodenbeschichtung noch aprotisches Lösungsmittel (5.) und gegebenenfalls noch Leitsalz (4.) oder Hilfsstoffe (6.) zugefügt. Einzelheiten im Hinblick auf Zusammensetzung und Präparation werden bei den Beispielen nicht einschränkend illustriert.

Die durch das erfindungsgemäße Verfahren hergestellten Kathoden und Batterieverbundsysteme sind gegenüber dem Stand der Technik erheblich verbessert.

Es werden nämlich nach dem erfindungsgemäßen Verfahren im Vergleich zu Lit. 3 vorzugsweise andere Leitsalze als LiCl0₄, andere aprotische Lösungsmittel als γ-BL (γ-Butyrolacton) und andere Polymerbinder als PLEX (Polymethylmethacrylat) u.a. verwendet. Werden Zellen nach dem erfindungsgemäßen Verfahren hergestellt, die denen des Beispiel 1 bzw. 2 der Lit. 3 entsprechend dimensioniert sind, so werden Nominalkapazitäten deutlich > 15 Ah und > 30 Ah erhalten.

### Beispiel 1

### Herstellung der Kathodenmasse:

65 Ma% Li-Cobaltoxid, 6,5 Ma% Fe₃0₄, 1,5 Ma% Li-Oxalatoborat werden unter Ar-Schutzgas in einer Kugelmühle bei R. T. 100 Minuten innig vermahlen, anschließend wird das Mahlgut bei 100 °C und 1,3 Pa (10⁻² Torr) 60 Minuten entgast und dann erneut unter Schutzgas nach Zugabe von 1 Ma% MgO und 8,5 Ma% Ethylencarbonat bei 30 - 50 °C 60 Minuten vermahlen, anschließend werden 9 Ma% Dyneon THV 200^{®} (Fluorelastomer-Terpolymer) und 7,5 Ma% Propylencarbonat zugefügt und 60 Minuten bei 80 - 100 °C in einem Mischer bei ca. 40 - 50 U/min intensiv durchgemischt, die Masse wurde bei R.T. granuliert und erneut bei R.T. und 1,3 Pa (10⁻² Torr), 60 Minuten entgast.

### Beispiel 2

### Extrusion und Beschichtung der Kathodenmasse, Herstellen der Kathode:

Die nach Beispiel 1 hergestellte Kathodenmasse wurde als Granulat in einen Zweiwellen -Collinextruder mit Knetscheibe eingespeist und bei 110 - 120 °C extrudiert, Verweilzeit ca. 5 - 7 Min:, die Masse wurde über eine Breitschlitzdüse als 150 mm breite und ca. 30 - 35 µm dicke Schicht ausgetragen und auf eine Al-Folie (mit Leitruß 30 Gew-% und Dyneon THV D geprimert) aufgetragen und bei ca. 50 - 65 °C zu einer 28 - 30 µm dicken Schicht laminiert, so dass eine erfindungsgemäße Kathode erhalten wurde.

### Beispiel 3

### Herstellen eines Batterieverbundsystems und Bau einer Wickelzelle:

Die nach Beispiel 2 hergestellte Kathode wurde mit einem Separator Cellgard®, getränkt mit 0,5 M Li-Oxalatoboratlösung in Dimethylcarbonat - und einer Anode (analog hergestellt zu der Kathode, jedoch ohne Schwermetalloxide und mit MCMB als aktive Anodenmasse) versehen und auf einer Wickelmaschine gewickelt, ∅ 7,2 cm. Die Ableiterfolien wurden durch Plasma-Spitzen kontaktiert, gepolt und das System in einer Schrumpffolie eingehaust.

### Beispiel 4

### Beladen, Formieren, Zell-Test:

Die entsprechend Beispiel 3 hergestellte Wickelzelle wurde formiert und beladen und zwar in einem 3-Stufenprozess mit einem Strom von 0,15 mA/m² galvanostatisch bei 1,5 V, 2,8 V, 4,2 V und dann potentiostatisch bei 4,2 V. Ladeprogramm und Geräte stammen von der Firma Digatron Aachen. Die Entladung erfolgte ebenfalls mit einem Strom von 0,15 mA/m² bis zu einer Entladespannung von 2,8 V. Die Entladekapazität beträgt 35 Ah, nach 150 Zyklen wurde ein Fading < 2,5 % festgestellt.

### Vergleichsbeispiel 5

Statt dem erfindungsgemäßen Fe₃0₄ wurde Leitruß verwendet, die Verarbeitung erfolgte unter Schutzgas Ar aber ohne Ausgasen der Eingangsstoffe.
a) das Herstellen der Kathodenmasse war deutlich erschwert, das Material war trocken und ließ sich nur schwer verarbeiten
b) die Extrusion war unruhig, das gleichmäßige Beschichten der Al-Folie war schwierig
c) die Zelle unter sonst gleichen Bedingungen erreichte nur eine Entladekapazität von 26 Ah, das Fading nach 20 Zyklen war > 2,5 %.

### Beispiel 6

### Herstellung einer Kathodenmasse:

Austausch von Li-Oxalatoborat durch LiPF₆

| | | |
|---|---|---|
| Im Ansatz fehlte Li-Oxalatoborat | - | entspr. Bsp. 1 |
| Extrusion und Beschichtung | - | entspr. Bsp. 2 |

### Herstellen des Batterieverbundsystems:

Statt der 0,5 M Li-Oxalatoboratlösung wurde eine 1 M LiPF₆ Lösung in Dimethylcarbonat/Ethylcarbonat 1:1 (v/v) gewählt.

Die Ergebnisse beim Batterietest entsprechen denen von Beispiel 4:

| | |
|---|---|
| Entladekapazität: | ~37 Ah |
| Fading (nach 150 Zyklen) | < 2,5. |

### Beispiel 7

### Herstellen einer Kathodenmasse:

Die Einsatzstoffe des Beispiels 1 (ohne die aprotischen Lösungsmittel Ethylencarbonat bzw. Propylencarbonat) wurden mit der 5-fachen Menge (Gewichtsmenge) NMP versetzt, der Polymerbinder bei 30 - 50 °C gelöst und die Dispersion in einer Stiftmühle 300 Minuten intensiv vermahlen und dann in einer Beschichtungsanlage auf die geprimerte Al-Folie (entsprechend Beispiel 2) aufgetragen und in einem integrierten Trocknungstunnel getrocknet. Beschichtungsbreite 148 - 149 mm, Dicke der Trockenschicht 25 - 28 µm.

Zum Herstellen des Batterieverbundsystems wird (wie im Bsp. 6) der Separator mit 1 M LiPF₆-Lösung (Dimethylcarbonat/Ethylcarbonat) getränkt.

Die Ergebnisse beim Batterietest entsprechen denen von Beispiel 4 bzw. 6:

| | |
|---|---|
| Entladekapazität: | ~39 Ah |
| Fading (nach 100 Zyklen) | < 2,5 %. |

### Beispiel 8

### Herstellen einer Kathodenmasse:

Die Einsatzstoffe des Beispiels 1 wurden mit der 3-fachen Gewichtsmenge Propylencarbonat versetzt in einem Intensiv-Mischer bei 30 - 50°C ca. 2 Stunden intensiv gemischt und dann über einen Extruder bei 150 - 170 °C verarbeitet. Die über eine Breitschlitzdüse austretende Masse wurde auf eine geprimerte Al-Folie ausgetragen und bildete eine 150 mm breite und 30 - 40 µm dicke Schicht, die anschließend über einen Volumentrockner entgast wurde. Nach dem Trocknen lag eine 27 - 30 µm dicke Schicht vor, die entsprechend Bsp. 7 in das Batteriesystem integriert wurde: Die Tests entsprachen Bsp. 4, 6 und 7:

| | |
|---|---|
| Entladekapazität: | 33 Ah |
| Fading nach (100 Zyklen) | ca. 2 %. |

## Patentansprüche

1. Aktivierte Kathode für Lithium-Polymerbatterien, die aufweist: Lithium-Schwermetalloxid, Polymerbinder und Leitsalz,
**dadurch gekennzeichnet, dass**
sie FeₐO₄ als Zusatz zu Li-interkalierbarem Schwermetalloxid umfasst und das Li-interkalierbare Schwermetalloxid ausgewählt ist aus Oxiden von Mn, Ni, Co, V, Cr, Mo, Ti, allein oder in Kombination.

2. Kathode nach Anspruch 1, **dadurch gekennzeichnet, dass** das Fe₃O₄ in einer Korngröße von 0,5 bis 30 µm vorliegt.

3. Kathode nach Anspruch 1 oder 2, **dadurch gekennzeichnet, dass** das Fe₃O₄ in einer Menge von 5-10 Masse-%, bezogen auf das Gesamtgewicht der Kathodenmasse vorliegt.

4. Kathode nach einem der Ansprüche 1 - 3, **dadurch gekennzeichnet, dass** das Li-interkalierbare Schwermetalloxid in Mengen von 60 - 85 Ma% vorliegt.

5. Kathode nach einem der vorhergehenden Ansprüche,
**dadurch gekennzeichnet, dass** der Polymerbinder ausgewählt ist aus Polyolefinen, Polyisobuten Polystyrol, Polybutadien, Polyisopren, Copolymeren von Styrol mit Butadien und/oder Isopren als statistische Copolymere oder anionisch hergestellten Blockpolymeren, ferner Polyvinylpyrrolidon, Polyvinylethern, Polyethern mit verkappten Endgruppen, oder Fluorelastomeren, einschließlich Copolymeren von diesen, allein oder in Kombination.

6. Kathode nach Anspruch 5, **dadurch gekennzeichnet, dass** die Fluorelastomeren ausgewählt sind aus Copolymeren, wobei der Anteil der Fluorelastomeren-Copolymeren im Polymergemisch 10 - 90 % beträgt und Terpolymeren, insbesondere aus Tetrafluorethylen, Hexafluorpropen, Fluoralkoxy-Monomeren und/oder Vinylidenfluorid.

7. Kathoden nach Anspruch 5 oder 6, **dadurch gekennzeichnet, dass** der Polymerbinder in Mengen von 6 - 15 Masse-% vorliegt.

8. Kathode nach einem der vorhergehenden Ansprüche, **dadurch gekennzeichnet, dass** das Leitsalz ausgewählt ist aus LiClO₄, LiBF₄, Li-Organylboraten, LiPF₆, Li-Triflaten, Li-Trifluormethylsulfonylimiden und deren Derivaten.

9. Kathode nach Anspruch 8, **dadurch gekennzeichnet, dass** das Leitsalz in Mengen von 0,9 bei 2,5 Masse-% vorliegt.

10. Kathode nach einem der vorhergehenden Ansprüche, **dadurch gekennzeichnet, dass** die Kathode ferner ein aprotisches Lösungsmittel ausgewählt aus N-Methylpyrrolidon, Alkylcarbonaten, Glykolethern, Perfluorethern, sowie Mono- und/oder Dimethacrylaten mit perfluorierten Alkylresten mit 2 - 20 Kohlenstoffatomen, allein oder in Kombination aufweist.

11. Kathode nach Anspruch 10, **dadurch gekennzeichnet, dass** das aprotische Lösungsmittel in Mengen von 10 - 20 Masse-% vorliegt.

12. Kathode nach einem der vorhergehenden Ansprüche, **dadurch gekennzeichnet, dass** die Kathode ferner einen Hilfsstoff ausgewählt aus MgO, Al₂O₃, SiO₂, Li-Acetylacetonat aufweist.

13. Kathode nach Anspruch 12, **dadurch gekennzeichnet, dass** der Hilfsstoff in Mengen von 0,1 bis 10 Masse-% vorliegt.

14. Verfahren zur Herstellung einer aktivierten Kathode nach Anspruch 1, **gekennzeichnet durch** die folgenden Schritte:
Vermischen von Li-interkalierbarem Schwermetalloxid von Mn, Co, Ni, V, Cr, Mo, Ti sowie deren Gemischen mit Fe₃O₂ und gegebenenfalls mit einem Leitsalz, einem Hilfsstoff und/oder einem aprotischen Lösungsmittel oder Gemischen von diesen, sowie einem Polymerbinder,
Zuführen des erhaltenen Gemisches zu einem Extruder, Extrudieren einer Kathodenmasse, und
Laminieren der extrudierten Kathodenmasse auf eine Ableiterfolie.

15. Verfahren nach Anspruch 14, **dadurch gekennzeichnet dass** das Gemisch aus Li-interkalierbaren Schwermetalloxiden mit Fe₃O₄ und gegebenenfalls Leitsalz und Hilfsstoff innig vermahlen wird und dann mit dem aprotischen Lösungsmittel oder Gemischen von diesen dispergiert wird und diese Dispersion einem Extruder zugeführt wird, der mit dem Polymerbinder gespeist wird, und dann die Kathodenmasse mittels einer Breitschlitzdüse ausgetragen wird und die entstandene Folie auf eine geprimerte Al-Ableiterfolie laminiert wird.

16. Verfahren nach Anspruch 14 oder 15, **dadurch gekennzeichnet, dass** das Leitsalz, gegebenenfalls mit aprotischem Lösungsmittel der Kathodenmasse vor dem Laminieren zum Batterieverbundsystem zugefügt wird.

17. Verfahren nach Anspruch 14, **dadurch gekennzeichnet, dass** der Polymerbinder dem Mahlgut aus Li-interkalierbaren Schwermetalloxiden, Fe₃O₂, Leitsalz, Hilfsstoff und aprotischem Lösungsmittel zugefügt wird, innig vermischt wird und dann diese Masse gegebenenfalls als Granulat, extrudiert und zu einer Kathode laminiert wird.

18. Verfahren nach einem der Ansprüche 14 bis 17, **dadurch gekennzeichnet, dass** Li-interkalierbare Schwermetalloxide, Fe₃O₄, Leitsalz, Hilfsstoff und Polymerbinder mit 50%, bezogen auf die eingesetzte Kathodenmasse, eines aprotischen Lösungsmittels versetzt, innig vermischt und dann mittels eines Extruders als Folie auf einen geprimerten Al-Ableiter laminiert werden, die Folie anschließend getrocknet und dann vor dem Herstellen des Batterieverbundsystems mit aprotischem Lösungsmittel allein oder im Gemisch mit anderen aprotischen Lösungsmitteln getränkt wird.

19. Verfahren nach Anspruch 14 oder 15, **dadurch gekennzeichnet, dass** die Kathodenmasse, die ohne Leitsalz zubereitet wurde nach dem Extrudieren und Trocknen mit Leitsalz und aprotischem Lösungsmittel getränkt wird und zwar vor dem Herstellen des Batterieverbundsystems.

20. Verfahren nach Anspruch 14, **dadurch gekennzeichnet, dass** das Gemisch aus Li-Schwermetalloxid, Fe₃O₄, Leitsalz, Polymerbinder und ggfs. Hilfsstoff unter intensivem Mischen mit dem aprotischem Lösungsmittel N-Methylpyrrolidon zu einer Dispersion geformt wird, und die entstandene Dispersion der Kathodenmasse auf einer Beschichtungsanlage in definierter Dicke auf eine Ableiterfolie aufgetragen wird.

21. Verfahren nach Anspruch 20, **dadurch gekennzeichnet, dass** die Beschichtung der Kathodenmasse eine Dicke von 24 - 30 µm aufweist.

22. Verfahren nach einem der Ansprüche 14 bis 21, **dadurch gekennzeichnet, dass** als Polymerbinder ein vernetzbares Polybutadienöl verwendet wird.

23. Verfahren nach Anspruch 22, **dadurch gekennzeichnet, dass** das vernetzbare Polybutadienöl eine Molmasse von 10 000 - 30 000 aufweist.

24. Verfahren nach einem der Ansprüche 14 bis 23, **dadurch gekennzeichnet, dass** als aprotisches Lösungsmittel Methacrylsäureoctafluorpentylester eingesetzt wird.

25. Verfahren nach Anspruch 20, **dadurch gekennzeichnet, dass** die Li-interkalierbaren Schwermetalloxide mit Fe₃O₄, sowie dem Hilfsstoff innig vermahlen werden und dann mit dem Polymerbinder in Form einer wässrigen Dispersion versetzt und innig vermahlen werden, die entstandene Dispersion auf einer Beschichtungsanlage auf eine geprimerte Al-Folie aufgetragen und getrocknet wird, und die entstandene Kathodenmasse mit einer Dicke von 15 - 30 µm auf der Ableiterfolie vor dem Herstellen des BatterieVerbundsystems mit Leitsalz und aprotischem Lösungsmittel getränkt wird.

26. Verfahren nach einem der Ansprüche 14 bis 25, **dadurch gekennzeichnet, dass** alle Schritte unter Schutzgas, vorzugsweise Argon, durchgeführt werden.

27. Verfahren nach einem der Ansprüche 14 bis 26, **dadurch gekennzeichnet, dass** alle Einsatzstoffe entgast werden und zwar bei Temperaturen von 20 bis 250 °C und Drücken von 1,0 · 10⁵Pa (760 Torr) bis 1,3 · 10⁻²Pa (10⁻⁴ Torr).

## Claims

1. Activated cathode for lithium-polymer batteries, comprising: lithium-heavy-metal oxide, polymer binder and conductive salt,
**characterized in that**
it contains Fe3O4 as an additive to lithium-intercalatable heavy-metal oxide, and the lithium-intercalatable heavy-metal oxide is selected from oxides of manganese, nickel, cobalt, vanadium, chromium, molybdenum, or titanium, alone or in combination.

2. Cathode according to Claim 1, **characterized in that** the Fe3O4 is present in a grain size of 0.5 to 30 µm.

3. Cathode according to Claim 1 or Claim 2, **characterized in that** the Fe3O4 is present in a proportion of 5 - 10 % of the total mass of the cathode compound.

4. Cathode according to any one of Claims 1 - 3, **characterized in that** the lithium-intercalatable heavy-metal oxide is present in proportions of 60 - 85 % by mass.

5. Cathode according to any one of the preceding claims, **characterized in that** the polymer binder is selected from polyolefins, polyisobutene polystyrene, polybutadiene, polyisoprene, copolymers of styrene with butadiene and/or isoprene as statistical copolymers or anionically produced block polymers, and also polyvinyl pyrrolidone, polyvinyl ethers, polyethers with capped terminal groups, or fluoroelastomers, including copolymers thereof, alone or in combination.

6. Cathode according to Claim 5, **characterized in that** the fluoroelastomers are selected from copolymers, the proportion of the fluoroelastomer copolymers in the polymer mixture being 10 - 90 %, and terpolymers, in particular from tetrafluoroethylene, hexafluoropropene, fluoroalkoxy monomers and/or vinylidene fluoride.

7. Cathode according to Claim 5 or Claim 6, **characterized in that** the polymer binder is present in proportions of 6 - 15 % by mass.

8. Cathode according to any one of the preceding claims, **characterized in that** the conductive salt is selected from LiClO4, LiBF4, lithium organyl borates, LiPF6, lithium triflates, and lithium trifluoromethylsulphonylimides, and derivatives thereof.

9. Cathode according to Claim 8, **characterized in that** the conductive salt is present in proportions of 0.9 to about 2.5 % by mass.

10. Cathode according to any one of the preceding claims, **characterized in that** the cathode moreover comprises an aprotic solvent selected from N-methyl-pyrrolidone, alkyl carbonates, glycol ethers, perfluoroethers, and mono- and/or di-methacrylates with perfluorinated alkyl groups with 2 - 20 carbon atoms, alone or in combination.

11. Cathode according to Claim 10, **characterized in that** the aprotic solvent is present in proportions of 10 - 20 % by mass.

12. Cathode according to any one of the preceding claims, **characterized in that** the cathode moreover comprises an additive selected from MgO, Al2O3, Si02, and lithium acetyl acetonate.

13. Cathode according to Claim 12, **characterized in that** the additive is present in proportions of 0.1 - 10 % by mass.

14. Process for the manufacture of an activated cathode according to Claim 1, **characterized by** the following steps:
blending lithium-intercalatable heavy-metal oxide of manganese, cobalt, nickel, vanadium, chromium, molybdenum or titanium, or mixtures thereof, with Fe3O4 and optionally with a conductive salt, an additive, and/or an aprotic solvent, or mixtures thereof, and with a polymer binder,
supplying the mixture obtained to an extruder,
extruding a cathode compound, and
laminating the extruded cathode compound on to a charge eliminator foil.

15. Process according to Claim 14, **characterized in that** the mixture of lithium-intercalatable heavy-metal oxides with Fe3O4 and optionally with conductive salt and additive is intensively ground and then dispersed with the aprotic solvent or mixtures thereof and this dispersion is supplied to an extruder which is fed with the polymer binder, and then the cathode compound is extruded by means of a sheet die and the resulting foil is laminated on to a primed aluminium charge eliminator foil.

16. Process according to Claim 14 or Claim 15, **characterized in that** conductive salt, optionally together with aprotic solvent, is added to the cathode compound prior to lamination to form the battery interconnection system.

17. Process according to Claim 14, **characterized in that** the polymer binder is added to the ground-up stock consisting of lithium-intercalatable heavy-metal oxides, Fe3O4, conductive salt, additive, and aprotic solvent and intimately blended, and then this compound, optionally in pellet form, is extruded and laminated to form a cathode.

18. Process according to any one of Claims 14 to 17, **characterized in that** an aprotic solvent in an amount equivalent to 50% of the amount of cathode compound used is added to lithium-intercalatable heavy-metal oxides, Fe3O4, conductive salt, additive, and polymer binder, and intimately mixed, and the mixture is then laminated as a foil by means of an extruder on to a primed aluminium charge eliminator, the foil is then dried and is then impregnated with aprotic solvent alone or with aprotic solvent mixed with other aprotic solvents before the battery interconnection system is produced.

19. Process according to Claim 14 or Claim 15, **characterized in that** the cathode compound, which has been prepared without conductive salt, is impregnated with conductive salt and aprotic solvent after extrusion and drying and before the battery interconnection system is produced.

20. Process according to Claim 14, **characterized in that** the mixture of lithium-heavy-metal oxide, Fe3O4, conductive salt, polymer binder, and additive if any, is made into a dispersion with the aprotic solvent N-methylpyrrolidone with intensive mixing, and the resulting dispersion of the cathode compound is discharged in a defined thickness on to a charge eliminator foil on a coating machine.

21. Process according to Claim 20, **characterized in that** the thickness of the cathode compound coating is 24 - 30 µm.

22. Process according to any one of Claims 14 to 21, **characterized in that** a crosslinkable polybutadiene oil is used as polymer binder.

23. Process according to Claim 22, **characterized in that** the molar mass of the crosslinkable polybutadiene oil is 10000 - 30000.

24. Process according to any one of Claims 14 to 23, **characterized in that** methacrylic acid octafluoropentyl ester is used as aprotic solvent.

25. Process according to Claim 20, **characterized in that** the lithium-intercalatable heavy-metal oxides together with Fe3O4 and additive is intensively ground and the polymer binder in the form of an aqueous dispersion is then added and the mixture is intensively ground, and the resulting dispersion is discharged on to a primed aluminium foil on a coating machine and dried, and the resulting cathode compound which has a thickness of 15 - 30 µm is impregnated with conductive salt and aprotic solvent on the charge eliminator foil before the battery interconnection system is produced.

26. Process according to any one of Claims 14 to 25, **characterized in that** all steps are carried out in an atmosphere of inert gas, preferably argon.

27. Process according to any one of Claims 14 to 26, **characterized in that** all the substances used in the formulation are degassed, specifically at temperatures of 20 to 250°C and at pressures of 1.0 · 10^5 Pa (760 torr) to 1.3 · 10^-2 Pa (10^-4 torr).

## Revendications

1. Cathode activée pour batteries au lithium-polymère, présentant : un oxyde de métal lourd-lithium, un liant polymère et un sel conducteur,
, **caractérisée en ce qu'**
elle comprend du Fe₃O₄ en tant qu'additif à l'oxyde de métal lourd susceptible d'être intercalé avec du lithium et l'oxyde de métal lourd susceptible d'être intercalé avec du lithium est sélectionné parmi des oxydes de Mn, Ni, Co, V, Cr, Mo, Ti, seuls ou en combinaison.

2. Cathode selon la revendication 1, **caractérisée en ce que** le Fe₃O₄ est présent sous une taille de grain dans la fourchette de 0,5 à 30 µm.

3. Cathode selon la revendication 1 ou 2, **caractérisée en ce que** le Fe₃O₄ est présent en une quantité dans la fourchette de 5 à 10 % en masse, rapportée au poids total de la masse de cathode.

4. Cathode selon l'une des revendications 1 à 3, **caractérisée en ce que** l'oxyde de métal lourd susceptible d'être intercalé avec du lithium est présent en des quantités dans la fourchette de 60 à 85 % en masse.

5. Cathode selon l'une des revendications précédentes, **caractérisée en ce que** le liant polymère est sélectionné parmi les polyoléfines, polyisobutène, polystyrène, polybutadiène, polyisoprène, copolymères de styrène avec du butadiène et/ou de l'isoprène en tant que copolymères statistiques ou bloc copolymères fabriqués de manière anionique, en outre les polyvinylpyrrolidone, polyvinyléthers, polyéthers avec des groupes terminaux coiffés, ou des fluoroélastomères, y compris des copolymères de ceux-ci, seuls ou en combinaison.

6. Cathode selon la revendication 5, **caractérisée en ce que** les fluoroélastomères sont sélectionnés parmi des copolymères, la proportion des copolymères de fluoroélastomères dans le mélange de polymères est de 10 à 90 % et de terpolymères, en particulier de tétrafluoroéthylène, hexafluoropropène, fluoralkoxy-monomères et/ou fluorure de vinylidène.

7. Cathode selon la revendication 5 ou 6, **caractérisée en ce que** le liant polymère est présent en une quantité dans la fourchette de 6 à 15 % en masse.

8. Cathode selon l'une des revendications précédentes, **caractérisée en ce que** le sel conducteur est sélectionné parmi LiClO₄, LiBf₄, Li-organylborates, LiPF₆, Li-triflates, Li-trifluorométhylsulfonylimides et leurs dérivés.

9. Cathode selon la revendication 8, **caractérisée en ce que** le sel conducteur est présent en une quantité dans la fourchette de 0,9 à 2,5 % en masse.

10. Cathode selon l'une des revendications précédentes, **caractérisée en ce que** la cathode présente en outre un solvant aprotique, sélectionné parmi le N-méthylpyrrolidone, les alkycarbonates, glycoléthers, perfluoéthers, ainsi que les mono- et/ou diméthylacrylates avec des résidus alkyl perfluorés avec 2 à 20 atomes de carbone, seuls ou en combinaison.

11. Cathode selon la revendication 10, **caractérisée en ce que** le solvant aprotique est présent en une quantité dans la fourchette de 10 à 20 % en masse.

12. Cathode selon l'une des revendications précédentes, **caractérisée en ce que** la cathode présente en outre un agent auxiliaire sélectionné parmi : MgO, Al₂O₃, SiO₂, acétylacétonate de Li.

13. Cathode selon la revendication 12, **caractérisée en ce que** l'agent auxiliaire est présent en une quantité dans la fourchette de 0,1 à 10 % en masse.

14. Procédé de fabrication d'une cathode activée selon la revendication 1, **caractérisé par** les étapes suivantes :
mélange d'oxyde de métal lourd, susceptible d'être intercalé avec du lithium, de Mn, Co, Ni, V, Cr, Lo, Ti, ainsi que leurs mélanges avec Fe₂O₃ et, le cas échéant, avec un sel conducteur, un agent auxiliaire et/ou un solvant aprotique ou des mélanges de ceux-ci, ainsi qu'un liant polymère,
amenée du mélange obtenu à une extrudeuse,
extrusion d'une masse de cathode, et
laminage de la masse de cathode extrudée sur une feuille de conducteur de sortie.

15. Procédé selon la revendication 14, **caractérisé en ce que** le mélange composé d'oxydes de métaux lourds susceptibles d'être intercalés avec du lithium avec du Fe₃O₄ et, le cas échéant, un sel conducteur et un agent auxiliaire est broyé intimement et ensuite mis en dispersion avec le solvant aprotique ou des mélanges de ceux-ci et cette dispersion est amenée à une extrudeuse, alimentée avec le liant polymère, et, ensuite, lamasse de cathode est expulsée au moyen d'une buse à fente large et la feuille constituée est laminée sur une feuille de conducteur de sortie en Al ayant subie un traitement d'accrochage.

16. Procédé selon la revendication 14 ou 15, **caractérisé en ce que** le sel conducteur, le cas échéant avec le solvant aprotique de la masse de cathode, est adjoint, avant le laminage, au système composite de batterie.

17. Procédé selon la revendication 14, **caractérisé en ce que** le liant polymère est ajouté au produit de broyage composé des oxydes de métaux lourds susceptibles d'être intercalés avec du Li, Fe₃O₄, sel conducteur, agent auxiliaire et solvant aprotique, mélangé intimement et, ensuite, cette masse est extrudée, le cas échéant sous forme de granulat, et laminée en une cathode.

18. Procédé selon l'une des revendications 14 à 17, **caractérisé en ce que** des oxydes de métaux lourds susceptibles d'être intercalés avec du Li, du Fe₃O₄, un sel conducteur, un agent auxiliaire et un liant polymère sont mélangés avec 50 %, rapporté à la masse de cathode utilisée, d'un solvant aprotique, mélangés intimement et ensuite, au moyen d'une extrudeuse, laminés sous forme de feuille sur un conducteur de sortie en Al, ayant subi un traitement d'accrochage, la feuille est ensuite séchée et subséquemment, avant fabrication du système composite de batterie, imbibée avec un solvant aprotique, seul ou en mélange avec d'autres solvants aprotiques.

19. Procédé selon la revendication 14 ou 15, **caractérisé en ce que** la masse de cathode, ayant été préparée sans sel conducteur, a été imbibée, après l'extrusion et le séchage, avec un sel conducteur et un solvant aprotique et, précisément, avant fabrication du système composite de batterie.

20. Procédé selon la revendication 14, **caractérisé en ce que** le mélange composé d'oxyde de métal lourd susceptible d'être intercalé avec du Li, Fe₃O₄, sel conducteur, liant polymère et, le cas échéant, agent auxiliaire, est formé, en le soumettant à un mélange intensif avec le solvant aprotique N-méthylpyrrolidone, en donnant une dispersion, et la dispersion obtenue de la masse de cathode est appliquée, sur une installation d'application de revêtement, sous une épaisseur définie, sur une feuille de conducteur d'évacuation.

21. Procédé selon la revendication 20, **caractérisé en ce que** le revêtement de la masse de cathode présente une épaisseur de 24 à 30 µm.

22. Procédé selon l'une des revendications 14 à 21, **caractérisé en ce qu'**on utilise une huile de polybutadiène réticulable comme liant polymère.

23. Procédé selon la revendication 22, **caractérisé en ce que** l'huile de polybutadiène réticulable présente une masse molaire dans la fourchette de 10.000 à 30.000.

24. Procédé selon l'une des revendications 14 à 23, **caractérisé en ce qu'**on utilise de l'octafluopentylester d'acide méthacrylique comme solvant aprotique.

25. Procédé selon la revendication 20, **caractérisé en ce que** les oxydes de métaux lourds susceptibles d'être intercalés avec du lithium sont broyés intimement avec du Fe₃O₄, ainsi qu'avec l'agent auxiliaire, et ensuite mélangés avec le liant polymère sous la forme d'une dispersion aqueuse et broyés intimement, la dispersion obtenue est appliquée sur une feuille d'Al ayant subi un traitement d'accrochage et séchée, et la masse de cathode obtenue, d'une épaisseur de 15 à 30 µm sur la feuille de conducteur de sortie, est imbibée avec un sel conducteur et un solvant aprotique, avant la fabrication du système composite de batterie.

26. Procédé selon l'une des revendications 14 à 25, **caractérisé en ce que** toutes les étapes sont effectuées sous atmosphère de gaz protecteur, de préférence de l'argon.

27. Procédé selon l'une des revendications 14 à 26, **caractérisé en ce que** toutes les substances utilisées sont dégazées et, précisément, à des températures dans la fourchette de 20 à 250°C et à des pressions dans la fourchette de 1,0 · 10⁵ Pa (760 Torr) à 1,3 · 10⁻² Pa (10⁻⁴ Torr).
